Europäisches Patentamt

European Patent Office

Office européen des brevets

(11) Publication number: **0 277 214 B1**

# EUROPEAN PATENT SPECIFICATION

(45) Date of publication of patent specification: **11.11.92**

(51) Int. Cl.⁵: **B01D 45/08**

(21) Application number: **87905577.0**

(22) Date of filing: **19.08.87**

(86) International application number:
**PCT/AU87/00277**

(87) International publication number:
**WO 88/01195 (25.02.88 88/05)**

(54) **COMPRESSED AIR MODIFIER.**

(30) Priority: **19.08.86 AU 7546/86**

(43) Date of publication of application:
**10.08.88 Bulletin 88/32**

(45) Publication of the grant of the patent:
**11.11.92 Bulletin 92/46**

(84) Designated Contracting States:
**AT BE CH DE FR GB IT LI LU NL SE**

(56) References cited:
| | |
|---|---|
| EP-A- 162 935 | AU-B- 1 371 976 |
| AU-B- 2 544 784 | FR-A- 329 657 |
| FR-A- 2 425 264 | GB-A- 980 061 |
| GB-A- 2 126 918 | US-A- 4 049 200 |
| US-A- 4 116 387 | US-A- 4 177 945 |
| US-A- 4 437 867 | |

(73) Proprietor: **SOLA, Antonio**
**Lot 31 Badgery's Creek Road**
**Bringelly, NSW 2171(AU)**

(72) Inventor: **SOLA, Antonio**
**Lot 31 Badgery's Creek Road**
**Bringelly, NSW 2171(AU)**

(74) Representative: **Smith, Norman Ian et al**
**F.J. CLEVELAND & COMPANY 40-43 Chancery Lane**
**London WC2A 1JO(GB)**

EP 0 277 214 B1

## Description

Compressed air is used extensively in industry to provide a variety of services associated with numerous activities such as propulsion, rotation, inflation and atomisation. In many instances it is desirable to control or modify a supply of compressed air in relation to such factors as temperature, humidity, flow rate and chemical composition. The present invention relates to the modification of compressed air by the generation of vapour phase chemical agents and has been found to have applications in such activities as deodorisation, corrosion inhibition, fumigation and paint curing.

The preferred embodiment of the present invention has been found to be particularly useful in the treatment and rapid curing of substrate coatings such as paints. Consequently, the treatment and rapid curing of substrate coatings is emphasised herein but it will be clear from the examples that the present invention has numerous applications other than the accelerated curing of substrate coatings. Although the present invention has developed from paint curing technology, the present invention is not limited to use in the paint curing field.

AU-B-476431 describes a pre-polymer coating vehicle, the drying of which can be greatly accelerated by treatment of the vehicle with a drying medium after application to a substrate.

AU-A-80608/82 discloses a method of coating a substrate which comprises coating an aromatic hydroxal-functional compound which further comprises substituted or unsubstituted 1,2-dihydroxybenzene or derivatives thereof in a multi-cyanate curing agent therefor which is, after coating onto the substrate exposed to a vaporous tertiary-amine catalyst to rapidly cure said applied film. Furthermore, AU-A-39524/85 discloses a polyurethane composition in which the drying rate is also accelerated by a catalyst. Other so-called catalyst curable painting systems are disclosed in AU-A-88361/82, AU-A-87415/82 and AU-A-84684/82. Reference to AU-A-35870/84 will show that there are a very large number of vapor permeation curable coatings within the prior art which include, by way of example only, U.S.-A-2967117, 4267239, 4343839, 4365039, 4366193 and 4396647.

In view of the foregoing, it is apparent that a great deal of prior art exists in this field. It should be realised that not only is the present invention particularly adapted for use in conjunction with any one of the foregoing systems or a particular catalytic agent, it has uses outside the painting field.

The process of applying a drying agent, as disclosed in AU-B-476,431 is to place the coated substrate in a drying chamber and then to introduce the vaporised drying agent. Numerous curing chambers have been proposed that would allow an atmosphere bearing an appropriate vapor phase curing agent to be introduced into and extracted from a curing chamber which also contains an article the substrate of which has been coated with a curable paint. Examples of such curing chambers can be found in U.S.-A-3851402 and 3931684 as well as AU-A-35479/84 and AU-A- 25783/84. The problem with the use of curing chambers is that the size of the articles that can be cost-effectively coated is restricted by the expense associated with the installation of a sufficiently large treatment chamber. For example, the installation of treatment booths of sufficient size to enclose a motor car is likely to represent a large capital cost to a smash repair business. Furthermore, as such a large booth would be lacking in mobility, a degree of flexibility would be lost from an existing operation by the installation of such a treatment booth. In operations where closed booths are used, extensive modification would be required so as to allow the drying agent to be introduced during the drying period and, also, to be extracted from the booth after treatment. Thus, even for an existing enclosed booth operation expensive further modifications would be required.

Alternatively, AU-A-23010/83 describes a process which enables the simultaneous application of a vaporous drying agent and a coating vehicle for an electrostatically deposited coating using hand held equipment, thus avoiding the need for a booth into which a catalyst bearing atmosphere may be introduced. The apparatus disclosed therein is deficient in that the means by which the drying agent is supplied is an "add-on" device which uses a separate supply means to the coating vehicle supply of the electrostatic gun disclosed therein. Consequently, in addition to a drying agent supply means being needed, a modified coating gun would also be required. Also, a method of applying paints using conventional pneumatic techniques is disclosed in AU-A-25447/84. A number of catalyst vapor generators are discussed therein, however, it is noted that the vapor generator disclosed in U.S.-A-4051886 is considered to be representative of the art.

It should also be noted that a vapor generator is also disclosed in AU-A-41966/85. The vapor generating device disclosed in AU-A-41966/85 appears, like the present invention, to be suited to applications other than painting, as the making of foundary and cores is discussed in the preamble thereof. The device of AU-A-41966/85 is a complex machine, requiring the maintenance of gas cylinders, the matching or balancing of two pressure regulators and the use or derivation of charts for successful operation.

Another vapour generator is disclosed AU-A-36214/78. This apparatus blows air through baffles across a gravity feed supply of chemical agent and works on a principle similar to an evaporative air conditioner, except that the evaporation of the chemical agent is the desired result rather than the lowering of air temperature. The invention of AU-A-36214/78 is useful for the production of low pressure vapour bearing atmospheres such as are utilized in the prior art curing chambers but is not capable of connection to use in conjunction with a conventional high pressure pneumatic source.

The present invention seeks to provide an on-line compressed air modifying apparatus to provide a vaporised chemical agent into a compressed air supply system.

According to a first aspect of the present invention there is provided an industrial apparatus for introducing a vaporised liquid chemically active agent into a compressed air supply system comprising: an air/liquid chemical agent mixing chamber comprising a compressed air supply inlet adapted for connection to an industrial high pressure pneumatic source and means to supply liquid chemical agent from a liquid chemical agent storage chamber into said mixing chamber via said inlet in combination with said compressed air in response to changes in pressure within said mixing chamber, said liquid chemical agent storage chamber being adapted for release of a relative vacuum forming within said storage chamber as compared with the pressure in said mixing chamber as liquid chemical agent is supplied to said mixing chamber, said mixing chamber containing baffle means to promote turbulence and to extract airborne droplets of said liquid chemical agent from within said mixing chamber, said mixing chamber further comprising modified air outlet means for passing compressed air and vaporized chemical agent out of said mixing chamber.

According to a second aspect of the present invention there is disclosed a method of introducing a vaporized liquid chemically active agent into a compressed air supply system by means of apparatus of the first aspect of the invention.

The present invention will now be described by way of example with reference to the accompanying drawings, in which:-

Figure 1 is a schematic representation of a first embodiment of the present invention;

Figure 2 is a detailed sectional view of an alternative mixing chamber to that illustrated in Fig. 1, and

Figure 3 shows a further embodiment of the present invention which incorporates an analysing tank.

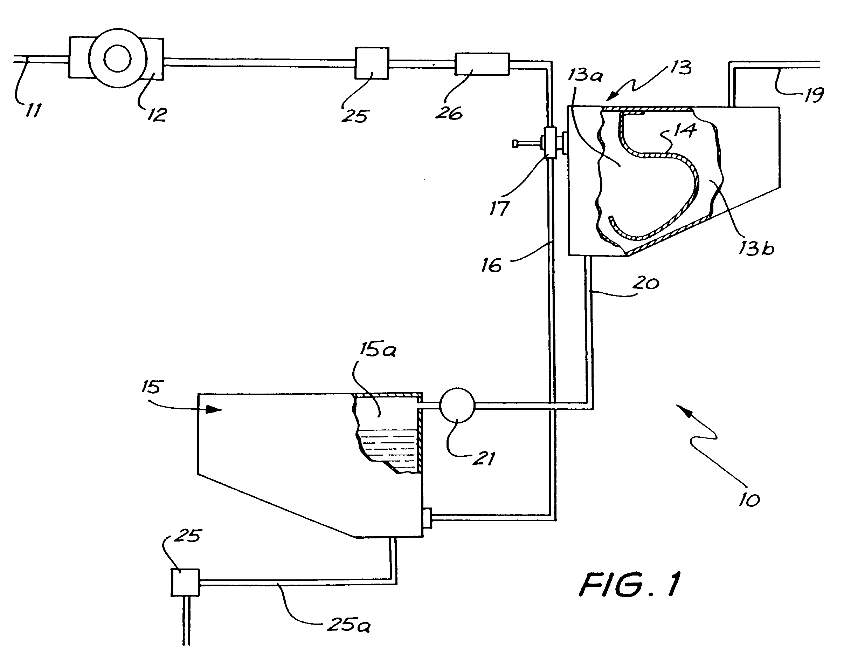

Figure 1 shows a first embodiment of the present invention, designated by numeral 10, connected to a compressed air supply system.

A compressed air inlet 11 communicates with a pressure control means 12, which in turn communicates with an air/drying agent mixing chamber 13. The mixing chamber 13 is further partially divided by a baffle means 14 into sub-chambers 13a and 13b.

A chemical agent is stored within chamber 15 and can be transferred to the mixing chamber 13 via hydraulic line 16 and venturi jets 17. A drain pipe 20 allows the mixing chamber 13 to communicate via a pressure responsive valve 21 to the storage chamber 15. An air outlet 19 is provided on mixing chamber 13 in communication with the sub-chamber 13b. In use, a supply of compressed air is connected to the pressure inlet 11 and the pressure controller 12 allows air to enter the mixing chamber 13 until a predetermined pressure is achieved therein. Compressed air is also transferred from the mixing chamber 13, via pipe 20 and pressure responsive valve 21 to the chemical agent storage chamber 15, until a predetermined pressure is also achieved in a head space 15a in storage chamber 15. Solenoid operated control valves 25 throughout the apparatus 10 allow individual integers of the preferred embodiment to be fluid isolated as desired. A one way valve 26 prevents reflux of chemical agent toward the pressure regulator 12.

When the air outlet 19 is opened, air escapes from sub-chamber 13b and is replaced by air in sub-chamber 13a. In response to the drop in air pressure in chamber 13, further compressed air is allowed to enter the mixing chamber 13 by the pressure controller 12, thus drawing in airborne chemical agent through venturi jets 17 and spraying same into the mixing chamber 13. The air and chemical agent turbulently combine in sub-chamber 13a and this mixture passes a turbulence enhancing baffle means 14, to sub-chamber 13b. Because liquid droplets are more massive than vapour molecules, a baffle means which promotes rapid directional change in air flow, will cause droplets to impact on the baffle and be extracted from the air. The air in sub-chamber 13b therefore contains air, vaporised chemical agent, and a minimal number of liquid chemical agent droplets. Liquid extracted from the air in sub-chamber 13a drains to the lower part of the mixing chamber 13, where the drain pipe 20 is located. As the chemical agent is emptied from the chemical agent storage chamber 15, the pressure therein drops and, when sufficiently low, the pressure sensitive valve 21 reopens allowing the pressure in the storage chamber to be restored to the previous level. When this happens, extracted liquids are transported along the drain pipe 20 and are thus transferred to the storage chamber 15. This system is beneficial in that it allows extracted chemical agents to be recycled. A solenoid operated control drain 25a allows the chemical agent to be drained from the storage chamber 15 when the apparatus is not in use.

The mixing chamber 13 of Fig. 1 is shown in a cut-away form to allow the baffle means 14 to be illustrated. It should be realised that the baffles means 14 abuts the side walls of the mixing chamber 13 and only a small clearance is provided between the bottom of the baffle 14 and the bottom of the mixing chamber. This is to ensure that the possibility of compressed air containing chemical agent droplets by-passing the baffle 14 is minimised and to prevent the build up of any extracted liquid chemical agent in sub-chamber 13b.

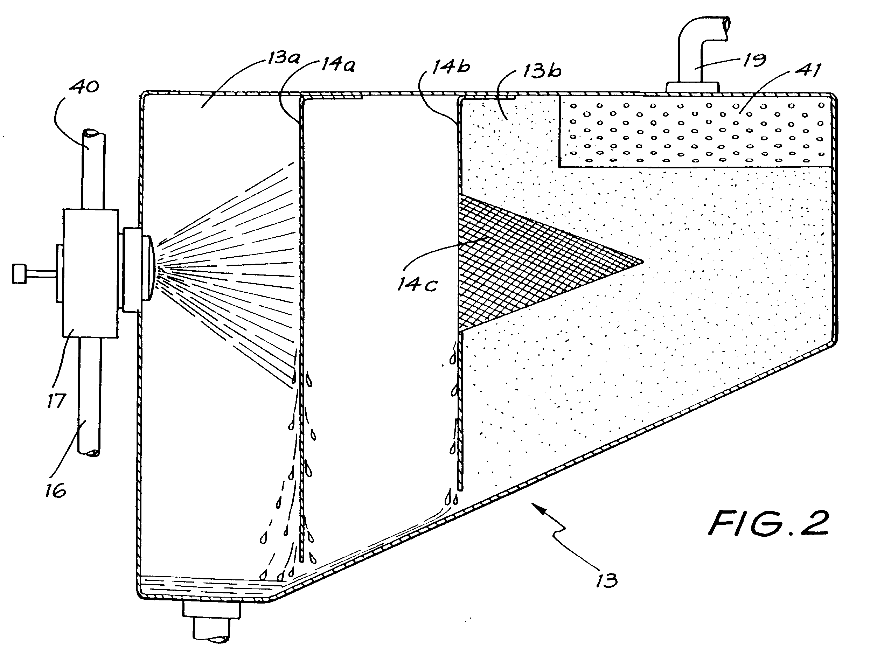

The baffle of Fig. 1 is of an accurately shaped metal plate and is perforated in an attempt to promote turbulance. The applicant has discovered that the alternative mixing chamber arrangement of Fig. 2 to be an improvement over the arrangement of Fig. 1 ensuring that airborne droplets of liquid chemical agent are completely extracted from the compressed air supply whilst still promoting turbulence.

In Fig. 2 compressed air is supplied through air line 40 and chemical agent is fed in liquid form through a hydraulic line 16 to a venturi jet 17. Compressed air is introduced into the mixing chamber 13 in the previously described manner drawing with it a spray of the chemical agent. In this embodiment the baffle means separating sub-chambers 13a and 13b comprises a first vertical baffle 14a, a second vertical baffle 14b and a conical baffle 14c. A final outlet baffle 41 encloses the air outlet 19. It has been found that an accurately shaped baffle means is not essential for the promotion of turbulence and the arrangement of Fig. 2 comprises the preferred baffle means.

Although by no means limiting, the applicant has discovered that if the first vertical baffle is perforated with circular holes of approximately 3mm diameter of 10mm spacings and if the second baffle is perforated with holes of approximately 1.5mm diameter at 10mm spacings with a space of approximately 30mm between vertical baffles 14a and 14b and the baffles are spaced approximately 40mm apart, good results can be achieved. The conical baffle 14c of the preferred embodiment is made from metal gauze and is located to intercept any spray from the Venturi jet 17 which may pass through both the first and second baffles 14a and 14b. A space of approximately 10mm below the baffles 14a and 14b allows extracted chemical agent to drain to the return pipe 20 for recycling. Although not essential to the present invention, all components within the mixing chamber 13 are preferably made from stainless steel or other corrosion resistant material to ensure a long and low maintenance life for apparatus in accordance with the present invention.

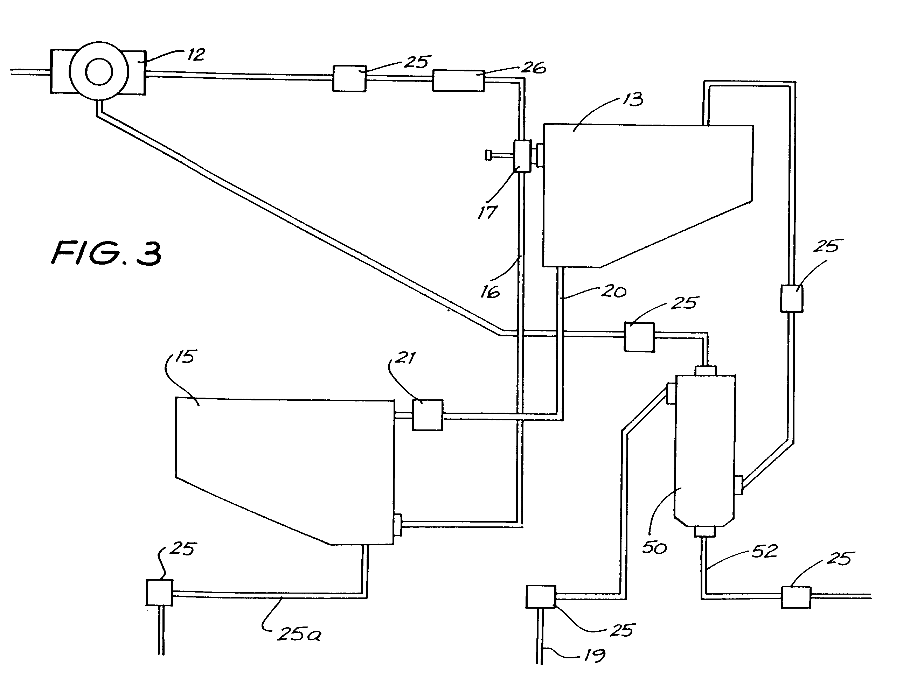

Referring to Fig. 3, it can be seen that it is also possible to include an analysing chamber 50 in embodiments of the present invention. Sensors (not illustrated) within the chamber can provide data such as chemical agent concentration, humidity, air pressure and temperature which may be of use to an operator. The analysing chamber 50 is connected in gaseous communication by way of a solenoid operated control valve 25 to the pressure regulator 12 and has a separate discharge line 52 to facilitate the flushing of residual chemical agent laden air after use.

Since the quantity of liquid chemical agent entrained by the compressed air at the venturi jets 17 is related to the pressure difference between the storage chamber 15 and the compressed air at jets 17, it will be appreciated that an advantage of the apparatus herein described is that the provision of pressure regulating means 20, 21 between the mixing chamber 13 and the storage chamber 15 to maintain the pressure in the storage chamber 15 at a predetermined level allows a substantially constant ratio of chemical agent to compressed air to be obtained in the mixing chamber 13.

The present invention can be used in conjunction with any of the numerous chemical curing agents used to accelerate the drying of paint systems such as those of the prior art referred to above. As stated, the present invention is not limited to use in conjunction with chemical drying agents and has been used in a fumigation application to provide a supply of air containing a vaporised insecticide.

The present invention may be used in applications other than for substrate coating. Furthermore, within the field of substrate coating, the present invention may be used to apply coatings other than paints as well as paints of various specifications.

Clearly, the present invention is capable of numerous modifications without departing from the scope of the present invention as broadly defined herein.

Embodiments of the present invention can be adapted for insertion in any conventional compressed air system without requiring modification to said system. The device can be simple to manufacture, easy to operate and portable thus ameliorating many of the deficiencies of the prior art.

## Claims

1. An apparatus to vaporize a liquid chemical agent and to introduce the same into a compressed air supply, the apparatus comprising:-
   a compressed air/chemical agent mixing chamber,

a separate liquid chemical agent storage chamber,

inlet means for introducing compressed air from a supply into said mixing chamber,

means for supplying liquid chemical agent from the storage chamber to said inlet in response to changes of pressure in the mixing chamber and for spraying said agent into the mixing chamber,

baffle means in the mixing chamber to promote turbulence and to extract droplets of liquid chemical agent in the mixing chamber,

and outlet means for the delivery of the air/agent mixture from the mixing chamber;

the apparatus being characterised by pressure regulating means to restore the pressure in the storage chamber towards a predetermined level as liquid agent is delivered from the storage chamber to the inlet.

2. Apparatus as claimed in claim 1 characterised in that said pressure regulating means comprises a return pipe to permit compressed air to enter the storage chamber from the mixing chamber and a pressure sensitive valve in the pipe which operates to maintain the pressure in the storage chamber at a predetermined level.

3. An apparatus as claimed in claim 1 or claim 2 characterised in that there is a clearance between the baffle means and the bottom of the mixing chamber.

4. An apparatus as claimed in any preceding claim characterised in that said baffle means comprises at least one perforated plate.

5. An apparatus as claimed in any preceding claim characterised in that the baffle means comprises a plurality of substantially vertical perforated plates and said supply/spray means is adapted to spray said liquid chemical agent at right angles to the perforated plates.

6. An apparatus as claimed in claim 4 or 5 wherein said baffle means further comprises a conically shaped piece of metal guaze located on a perforated plate distal to said supply/spray means and in line with the direction in which said liquid chemical agent is sprayed and a perforated enclosure around a junction at which said air supply outlet means joins said air liquid chemical agent mixing chamber.

7. An apparatus as claimed in any preceding claim characterised in that said outlet means further comprises an analysing chamber.

8. An apparatus as claimed in any preceding claim characterised in that said inlet means includes at least one venturi jet.

9. A method of introducing a vaporized liquid chemical agent into a compressed air supply system characterised by utilizing apparatus as claimed in any one of the preceding claims.

10. A method as claimed in claim 9 characterised in that air with contained vapour is delivered from said mixing chamber via said outlet means surrounded by a perforated enclosure.

**Patentansprüche**

1. Vorrichtung zur Verdampfung eines flüssigen chemischen Stoffs und zu dessen Einführung in ein Reservoir verdichteter Luft, wobei die Vorrichtung aus folgendem besteht:

einer Kammer zur Mischung verdichteter Luft mit einem chemischen Stoff,

einer separaten Vorratskammer für flüssigen chemischen Stoff,

einem Einlaßmittel zur Einführung verdichteter Luft aus einem Reservoir in jene Mischkammer,

einem Mittel zur Förderung flüssigen chemischen Stoffs von der Vorratskammer zu jenem Einlaß als Reaktion auf Veränderungen des in der Mischkammer vorherrschenden Drucks, und zum Sprühen jenes Stoffs in die Mischkammer,

einem Leitmittel in der Mischkammer zur Förderung von Turbulenz und zur Extraktion von Tröpfchen des flüssigen chemischen Stoffs in der Mischkammer,

sowie aus einem Auslaßmittel für die Abführung der Mischung aus Luft und Stoff aus der Mischkammer, wobei die Vorrichtung durch ein Druckregelmittel gekennzeichnet ist, das den Druck in der Vorratskammer wieder auf einen vorbestimmten Wert einregelt, wenn flüssiger Stoff von der Vorratskammer zum Einlaß gefördert wird.

2. Vorrichtung nach Anspruch 1, dadurch gekennzeichnet, daß jenes Druckregelmittel eine Rückleitung umfaßt, so daß verdichtete Luft aus der Mischkammer in die Vorratskammer eintreten kann, sowie ein druckempfindliches Ventil in der Leitung, das den Druck in der Vorratskammer auf einem vorherbestimmten Wert hält.

3. Anspruch nach Anspruch 1 oder 2, dadurch gekennzeichnet, daß das Leitmittel vom Boden der Mischkammer beabstandet ist.

4. Vorrichtung nach einem der vorhergehenden Ansprüche, dadurch gekennzeichnet, daß jenes Leitmittel mindestens eine perforierte Platte umfaßt.

5. Vorrichtung nach einem der vorhergehenden Ansprüche, dadurch gekennzeichnet, daß das Leitmittel eine Vielzahl von im wesentlichen vertikalen perforierten Platten umfaßt und daß jenes Förder-/Sprühmittel jenen flüssigen chemischen Stoff im rechten Winkel auf die perforierten Platten sprühen kann.

6. Vorrichtung nach Anspruch 4 oder 5, bei der jenes Leitmittel weiterhin ein konisch geformtes Stück Metallnetz, das sich auf einer von jenem Förder-/Sprühmittel entfernt liegenden perforierten Platte befindet und in der Richtung liegt, in die jener flüssige chemische Stoff gesprüht wird, sowie eine perforierte Einfassung um einen Anschluß umfaßt, an dem jenes Luftzufuhrauslaßmittel an der Kammer für die Mischung von Luft und flüssigem chemischem Stoff angeschlossen ist.

7. Vorrichtung nach einem der vorhergehenden Ansprüche, dadurch gekennzeichnet, daß jenes Auslaßmittel weiterhin eine Analysekammer umfaßt.

8. Vorrichtung nach einem der vorhergehenden Ansprüche, dadurch gekennzeichnet, daß jenes Einlaßmittel mindestens eine Venturi-Düse umfaßt.

9. Verfahren zur Einführung eines verdampften flüssigen chemischen Stoffs in ein Reservoirsystem aus verdichteter Luft, gekennzeichnet durch den Einsatz der Vorrichtung nach einem der vorhergehenden Ansprüche.

10. Verfahren nach Anspruch 9, dadurch gekennzeichnet, daß die Luft, die Dampf enthielt, von jener Mischkammer über jenes von einer perforierten Einfassung umgebene Auslaßmittel abgeführt wird.

**Revendications**

1. Appareil pour vaporiser un agent chimique liquide et l'introduire dans une alimentation en air comprimé, l'appareil comprenant :
   une chambre de mélange de l'air comprimé et de l'agent chimique,
   une chambre de stockage séparée de l'agent chimique liquide,
   un moyen d'entrée servant à introduire de l'air comprimé à partir d'une alimentation dans ladite chambre de mélange,
   un moyen pour amener l'agent chimique liquide depuis la chambre de stockage dans ladite entrée en réponse à des variations de pression dans la chambre de mélange et pour pulvériser ledit agent dans la chambre de mélange,
   un moyen déflecteur situé dans la chambre de mélange pour favoriser les turbulences et extraire les gouttelettes d'agent chimique liquide dans la chambre de mélange,
   et un moyen de sortie pour délivrer le mélange air/agent depuis la chambre de mélange;
   l'appareil étant caractérisé par un moyen de régulation de la pression servant à rétablir la pression dans la chambre de stockage à une valeur prédéterminée à mesure que l'agent liquide est délivré depuis la chambre de stockage vers l'entrée.

2. Appareil selon la revendication 1, caractérisé en ce que ledit moyen de régulation de la pression comprend un tuyau de retour permettant à l'air comprimé de pénétrer dans la chambre de stockage à partir de la chambre de mélange et un clapet sensible à la pression dans le tuyau qui fonctionne pour maintenir la pression dans la chambre de stockage à une valeur prédéterminée.

3. Appareil selon la revendication 1 ou la revendication 2, caractérisé en ce qu'il existe un jeu entre le moyen déflecteur et le fond de la chambre de mélange.

4. Appareil selon l'une quelconque des revendications précédentes, caractérisé en ce que ledit moyen déflecteur comprend au moins une plaque perforée.

5. Appareil selon l'une quelconque des revendications précédentes, caractérisé en ce que ledit moyen déflecteur comprend une pluralité de plaques perforées sensiblement verticales et ledit moyen d'alimentation/pulvérisation est adapté pour pulvériser ledit agent chimique liquide à angle droit par rapport aux plaques perforées.

6. Appareil selon la revendication 4 ou 5, dans lequel ledit moyen déflecteur comprend en outre une pièce de forme conique en gaze métallique située sur une plaque perforée distale par rapport audit moyen d'alimentation/pulvérisation et alignée avec la direction dans laquelle ledit agent chimique liquide est pulvérisé et une enceinte perforée autour d'une jonction à laquelle ledit moyen de sortie de l'alimentation en air rejoint ladite chambre de mélange avec l'agent chimique liquide.

7. Appareil selon l'une quelconque des revendications précédentes, caractérisé en ce que ledit moyen de sortie comprend en outre une chambre d'analyse.

8. Appareil selon l'une quelconque des revendications précédentes, caractérisé en ce que ledit moyen d'entrée comprend au moins une tuyère venturi.

9. Procédé pour introduire un agent chimique liquide vaporisé dans un système d'alimentation en air comprimé, caractérisé en ce que l'on utilise un appareil selon l'une quelconque des revendications précédentes.

10. Procédé selon la revendication 9, caractérisé en ce que l'air qui contient de la vapeur est délivré à partir de ladite chambre de mélange par ledit moyen de sortie entouré d'une enceinte perforée.

FIG. 1

EP 0 277 214 B1

FIG.2

FIG. 3

EP 0 277 214 B1